# EUROPEAN PATENT APPLICATION

(11) **EP 2 472 494 A1**
(43) Date of publication of application: **04.07.2012**
(21) Application number: 11195312.1
(22) Date of filing: 22.12.2011
(51) Int. Cl.: G09B 5/02, G09B 5/14

(54) **Method and device for generating additional information of e-book contents in reader**

(30) Priority: 03.01.2011 KR 20110000233
(71) Applicant: Samsung Electronics Co., Ltd., Suwon-si, Gyeonggi-do (KR)
(72) Inventor: Kwon, Ki-Hwan, Seoul (KR); Jung, Won-Bae, Gyeonggi-do (KR); Choi, Ji-Yeong, Seoul (KR)
(74) Representative: Jenkins, Richard Gavin

(57) **Abstract**

A method of creating a relationship diagram for electronic book (or e-book) contents in a reader includes determining whether there is a relationship diagram creation request in a current page. The method includes, if there is the relationship diagram creation request, determining whether there is a relationship diagram associated with a previous page. In addition, the method includes, if there is the relationship diagram associated with the previous page, displaying the relationship diagram in an input window. Further, the method includes, if the relationship diagram displayed in the input window is modified and there is a save request, allowing the modified relationship diagram to be saved in accordance with the current page.

## Description

### TECHNICAL FIELD OF THE INVENTION

The present invention relates to an electronic book (or an e-book). More particularly, the present invention relates to a method and apparatus for creating additional information to help understanding of e-book contents and for utilizing the additional information in a reader.

### BACKGROUND OF THE INVENTION

An electronic book (or an e-book) collectively refers to digital books when contents of writing that have already published into a book or that can be published are stored in an electronic recording medium storage device by using digital data and thereafter the contents can be read and listened via a computer or a portable reader by using a wired/wireless information communication network. The e-book is provided in various formats of contents according to a purpose of a specific field.

The e-book is cheaper than a paper book and can be obtained via online purchase, which consumes less time in purchasing. Further, a user can purchase only a necessary part. Recently, the e-book allows the user to watch video or listen background music while reading the book, and the user can easily find a desired book anytime anywhere by storing e-books in a Personal Digital Assistant (PDA) or the portable reader. The e-book industry has recently been developed rapidly to have an improved screen resolution, various editing functions, etc., so that pages can be turned with a single click. In addition, not only a memo but also text zoom in/out become possible, and text search, contents download, or the like is also possible in an online bookstore or library.

As described above, despite of growing improvement of the e-book, there is an overload to satisfy users' demands. For example, the user requires additional information to help understanding of e-book contents.

### SUMMARY OF THE INVENTION

To address the above-discussed deficiencies of the prior art, it is a primary object to provide at least the advantages described below. Accordingly, an aspect of the present disclosure is to provide a method and apparatus for creating additional information to help understanding of electronic book (or e-book) contents in a reader.

Another aspect of the present disclosure is to provide a method and apparatus for sharing additional information of e-book contents in a reader.

Another aspect of the present disclosure is to provide a method and apparatus for providing self-paced learning or a correction lesson by using additional information created for e-book contents in a reader.

The present disclosure provides a method of creating a relationship diagram for electronic book (or e-book) contents in a reader determining whether there is a relationship diagram creation request in a current page, if there is the relationship diagram creation request, determining whether there is a relationship diagram associated with a previous page, if there is the relationship diagram associated with the previous page, displaying the relationship diagram in an input window and if the relationship diagram displayed in the input window is modified and there is a save request, allowing the modified relationship diagram to be saved in accordance with the current page.

The method further comprises, if there is no relationship diagram creation request in the current page, determining whether there is the relationship diagram associated with the previous page, and if there is the relationship diagram associated with the previous page, allowing the relationship diagram to be saved in association with the current page.

The relationship diagram creation request is generated by using a predetermined key or an element displayed by the e-book contents.

The element of the e-book contents is any one of a text and an image.

If the relationship diagram creation request is generated by using the element of the e-book contents, a relationship diagram object for the element is automatically created in the input window.

The element of the e-book contents provides a queue for a preview function, a view function, or a modification function for an updated relationship diagram.

The preview function displays a relationship diagram reduced according to a specific rate on a current page screen.

In the relationship diagram of the current page, the preview function displays only an object related to an element that provides a queue, another element that directly relates to the object, and a part that shows a relationship between the two entities on a current page screen.

The view function changes the screen to a specific view window and displays a relationship diagram for the current page in the view window.

The modification function changes the screen to the input window, and displays a relationship diagram for the current page in the input window.

The relationship diagram is able to include a dependent detailed description or relationship diagram.

The allowing of the modified relationship diagram to be saved in association with the current page if the relationship diagram displayed in the input window is modified and the save request is received comprises determining whether an object is added or deleted in the relationship diagram displayed in the input window, and if the object is added and there is a save request, adding the object to a relationship diagram of a next page related to the displayed relationship diagram, and if the object is deleted and there is a saving request, deleting the object from a relationship diagram of a page related to the displayed relationship diagram.

The relationship diagram is a diagram for showing a relationship between objects.

The present disclosure provides a method of updating additional information created for e-book contents in a reader comprising displaying reference additional information together and modifying the additional information by using the reference additional information.

The reference additional information is downloaded from a server of a network.

The present disclosure provides a method of sharing additional information of e-book contents in a reader comprising accessing to a server, and uploading the additional information of the e-book contents to the server or downloading the additional information from the server.

The present disclosure provides a method of studying e-book contents in a reader comprising creating additional information of the e-book contents, transferring the created additional information to a mentor, and receiving additional information corrected by the mentor.

In the transferring of the created additional information to the mentor, the created additional information is transferred to the server, and the server announces the transfer of the additional information to the mentor.

In the receiving of the additional information corrected by the mentor, the corrected additional information is transferred to the server, and the server announces the transfer of the additional information to the reader.

The present disclosure provides a method of creating additional information of e-book contents by readers accessed to a server of a network comprising preparing a tool required for creating the additional information of the e-book contents and a chatting room, and creating a cyberspace which enables participation of users, and creating the additional information of the e-book contents on a real-time basis by the users of the readers together in the cyberspace.

The users of the readers are classified into users who can participate in the creating of the additional information and other users according to an environment configuration.

The present disclosure provides a method of remote learning between a reader of a mentee (i.e., a person who takes a lesson) and a reader of a mentor (i.e., a person who teaches the lesson), each of which accesses to a server of a network comprising preparing a tool required for creating additional information of e-book contents, a correction tool used for correction, and a chatting room, and creating a cyberspace which enables participation of permitted users, and correcting, by a user of the mentor's reader, the additional information of the e-book contents provided by a user of the mentee's reader on a real-time basis.

The present disclosure provides an apparatus that creates a relationship diagram for e-book contents in a reader comprising a storage unit that stores target data to be displayed, a display unit that outputs an image signal by decoding the data stored in the storage unit, an input unit that receives a user input, and a controller that provides overall control for an operation of the e-book reader, wherein if there is a relationship diagram creation request in a current page and there is a relationship diagram associated with a previous page, the controller displays the relationship diagram on an input window, and if the relationship diagram displayed on the input window is modified and there is a save request, the controller allows an updated relationship diagram to be saved in association with the current page.

If there is no relationship diagram creation request in the current page, the controller determines whether there is the relationship diagram associated with the previous page, if there is the relationship diagram associated with the previous page, the controller allows the relationship diagram to be saved in association with the current page.

The relationship diagram creation request is generated by using a predetermined key or an element displayed by the e-book contents.

The element of the e-book contents is any one of a text and an image.

If the relationship diagram creation request is generated by using the element of the e-book contents, the controller automatically creates a relationship diagram object for the element in the input window.

The controller provides the element of the e-book contents with a queue for a preview function, a view function, or a modification function for an updated relationship diagram.

The preview function displays a relationship diagram reduced according to a specific rate on a current page screen.

In the relationship diagram of the current page, the preview function displays only an object related to an element that provides a queue, another element that directly relates to the object, and a part that shows a relationship between the two entities on a current page screen.

The view function changes the screen to a specific view window and displays a relationship diagram for the current page in the view window.

The modification function changes the screen to the input window, and displays a relationship diagram for the current page in the input window.

The relationship diagram is able to include a dependent detailed description or relationship diagram.

If the object is added to the relationship diagram displayed in the input window and there is a save request, the controller adds the object to a relationship diagram of a next page related to the displayed relationship diagram, and if the object is deleted and there is a saving request, the controller deletes the object from a relationship diagram of a page related to the displayed relationship diagram.

The relationship diagram is a diagram for showing a relationship between objects.

The present disclosure provides an apparatus that updates additional information created for e-book contents in a reader comprising a storage unit that stores target data to be displayed, a display unit that outputs an image signal by decoding the data stored in the storage unit, an input unit that receives a user input, a communication unit for communication, and a controller that provides overall control for an operation of the e-book reader, wherein if there is an additional information update request, the controller displays reference additional information together, and if the additional information is modified and there is a save request, the controller saves updated additional information.

The reference additional information is downloaded from a server of a network.

The present disclosure provides an apparatus for sharing additional information of e-book contents in a reader comprising a storage unit that stores target data to be displayed, a display unit that outputs an image signal by decoding the data stored in the storage unit, an input unit that receives a user input, a communication unit for communication, and a controller that provides overall control for an operation of the e-book reader, wherein according to an additional information sharing request, the controller provides control to access to a server and to upload the additional information of the e-book contents to the server or download the additional information from the server.

The present disclosure provides a learning system for e-book contents comprising a mentee's reader that creates additional information of the e-book contents, a mentor's reader that corrects the e-book contents' additional information created by the mentee's reader, and a server that transfers the additional information created by the mentee's reader to the mentor's reader and transfers the additional information corrected by the mentor's reader to the mentee's reader.

The server announces to the mentor's reader that the created additional information is received from the mentee's reader.

The server announces to the mentee's reader that the corrected additional information is received from the mentor's reader.

The present disclosure provides a system for creating additional information of e-book contents by readers accessed to a server of a network comprising a server that prepares a tool required to creates the additional information of the e-book contents and a chatting room, and creates a cyberspace which enables participation of users, and readers that create the additional information of the e-book contents on a real-time basis by allowing the users to participate in the cyberspace.

The readers are classified into readers which can participate in the creating of the additional information and other readers according to an environment configuration.

The present disclosure provides a system for remote learning between a reader of a mentee (i.e., a person who takes a lesson) and a reader of a mentor (i.e., a person who teaches the lesson), each of which accesses to a server of a network comprising the server that prepares a tool required to create additional information of e-book contents, a correction tool used for correction, and a chatting room, and create a cyberspace which enables participation of permitted users, and the mentee's reader that can take a lesson of correction for the additional information of the e-book contents and the mentor's reader that provides the lesson of correction by participating in the cyberspace.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates an electronic book (or e-book) reader according to an exemplary embodiment of the present disclosure;

FIG. 2 illustrates a process of creating additional information of e-book contents in an e-book reader according to an exemplary embodiment of the present disclosure;

FIG. 3 illustrates a process of creating additional information of e-book contents in an e-book reader according to an exemplary embodiment of the present disclosure;

FIG. 4 illustrates a process of modifying additional information of e-book contents in an e-book reader according to an exemplary embodiment of the present disclosure;

FIG. 5 illustrates a process of deleting an object in a relationship diagram for e-book contents in an e-book reader according to an exemplary embodiment of the present disclosure.

FIG. 6 illustrates a process of adding an object in a relationship diagram for e-book contents in an e-book reader according to an exemplary embodiment of the present disclosure;

FIG. 7 illustrates a method of displaying an input window for creating and modifying a relationship diagram for e-book contents in an e-book reader according to an exemplary embodiment of the present disclosure;

FIG. 8A illustrates a screen that displays an input window for creating a relationship diagram according to an exemplary embodiment of the present disclosure;

FIG. 8B illustrates a screen for inputting a detailed description depending on a specific object in a relationship diagram input window according to an exemplary embodiment of the present disclosure;

FIG. 8C illustrates a screen for creating a relationship diagram depending on a specific object in an input window according to an exemplary embodiment of the present disclosure;

FIG. 9A illustrates a preview screen of a relationship diagram by using an element which indicates a queue in a specific page of e-book contents according to an exemplary embodiment of the present disclosure;

FIG. 9B illustrates a preview screen of a relationship diagram by using an element which indicates a queue in a specific page of e-book contents according to an exemplary embodiment of the present disclosure;

FIG. 9C illustrates a preview screen of a relationship diagram by using an element which indicates a queue in a specific page of e-book contents according to an exemplary embodiment of the present disclosure;

FIG. 9D illustrates a view screen of a relationship diagram by using an element which indicates a queue in a specific page of e-book contents according to an exemplary embodiment of the present disclosure;

FIG. 9E illustrates a screen for viewing a relationship diagram according to an exemplary embodiment of the present disclosure;

FIG. 10A illustrates a system for sharing e-book contents' additional information created by users according to an exemplary embodiment of the present disclosure;

FIG. 10B illustrates a screen for uploading or downloading additional information by accessing to a server prepared to share additional information of e-book contents in an e-book reader according to an exemplary embodiment of the present disclosure;

FIG. 10C illustrates a view window for comparing relationship diagrams created for the same e-book contents in an e-book reader according to an exemplary embodiment of the present disclosure;

FIG. 10D illustrates a screen when accessing to a server to discuss a relationship diagram of e-book contents in an e-book reader according to an exemplary embodiment of the present disclosure;

FIG. 11A illustrates a process for remote learning according to an exemplary embodiment of the present disclosure; and

FIG. 11B illustrates a screen when an e-book reader accesses to a server for remote learning according to an exemplary embodiment of the present disclosure.

### DETAILED DESCRIPTION OF THE INVENTION

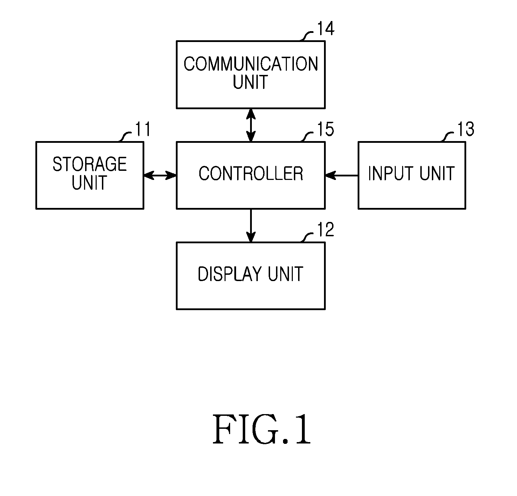

FIGURES 1 through 11B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. Preferred embodiments of the present disclosure will be described herein below with reference to the accompanying drawings. In the following description, well-known functions or constructions are not described in detail since they would obscure the disclosure in unnecessary detail. Also, the terms used herein are defined according to the functions of the present disclosure. Thus, the terms may vary depending on user's or operator's intension and usage. That is, the terms used herein must be understood based on the descriptions made herein.

The present disclosure described hereinafter relates to a technique for creating additional information of electronic book (or e-book) contents to help understanding of the e-book contents and for utilizing the generated additional information. The additional information is created according to a page flow. Additional information of a current page can be saved by updating additional information of a previous page or can be saved without updating of the additional information of the previous page. Further, the additional information of the current page can be new additional information which is not associated with the previous page. Furthermore, according to the present disclosure, the additional information of the e-book contents can be shared by using a communication network. As will be described below, a user can study on the basis of a process of comparing additional information created by the user and additional information created by a different user. In addition, the additional information created by the user can be corrected by the different user, and a learning system for this can be created at a later time.

FIG. 1 illustrates an e-book reader according to an exemplary embodiment of the present disclosure.

Referring to FIG. 1, the e-book reader includes a storage unit 11 for storing target data to be displayed, a display unit 12 for outputting an image signal by decoding the data stored in the storage unit 11, an input unit 13 for receiving a user input, a communication unit 14 for communication, and a controller 15 for providing overall control for an operation of the e-book reader.

The storage unit 11 stores a specific program that controls an overall operation of the reader and a variety of data that is input/output when performing a control operation of the reader. In particular, the storage unit 11 can store a program for creating additional information according to the exemplary embodiment of the present disclosure and a variety of data related to the program.

The controller 15 provides overall control to the reader. In particular, the controller 15 performs algorithms that generate and utilize additional information according to the exemplary embodiment of the present disclosure. Hereinafter, the operation of the controller 15 will be described in greater detail with reference to the accompanying drawings.

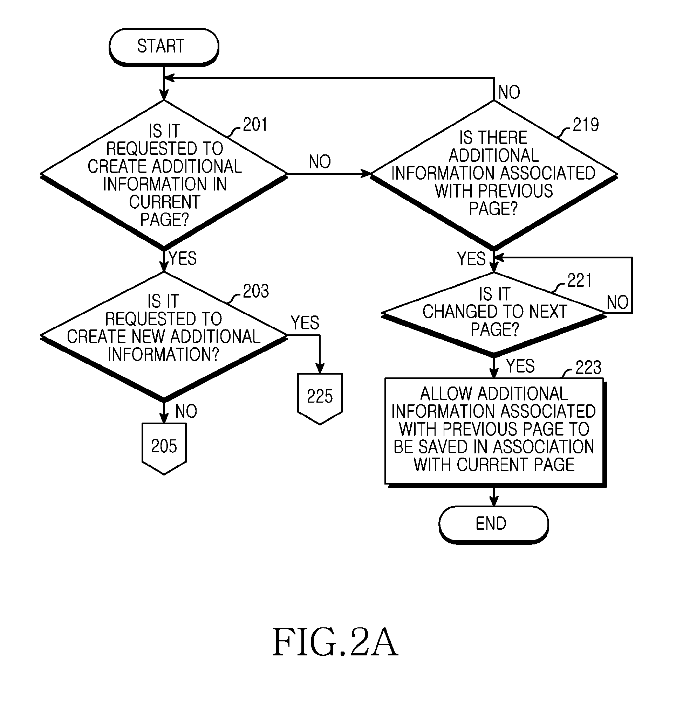

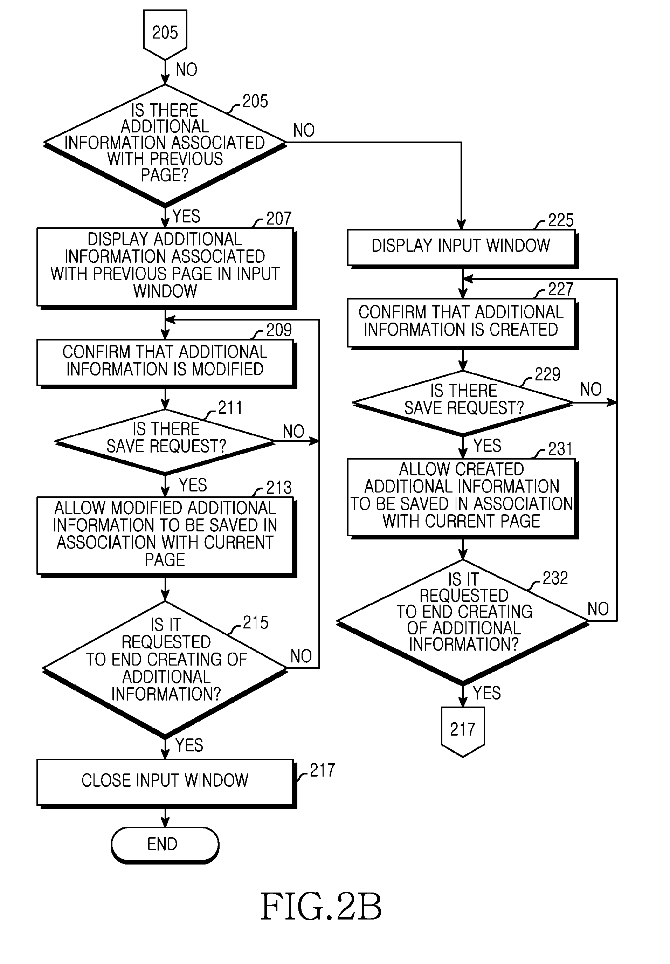

FIG. 2 illustrates a process of creating additional information of e-book contents in an e-book reader according to an exemplary embodiment of the present disclosure.

Referring to FIG. 2, the controller 15 determines whether it is requested to create additional information in a current page in block 201.

If it is not requested to create the additional information in the current page in block 201, the controller 15 determines whether there is additional information associated with a previous page in block 219. If there is the additional information associated with the previous page, the controller 15 determines whether the current page is changed to a next page in block 221, and then allows the additional information associated with the previous page to be saved in association with the current page in block 223. That is, the additional information of the previous page is applied to the current page without update.

If it is requested to create the additional information in block 201, the controller 15 determines whether it is requested to create new additional information in block 203. As will be described below, block 203 is a process of determining whether the additional information of the current page will be created by updating the previous additional information or whether it will be created as new additional information which is related to the previous additional information.

If it is not requested to create the new additional information in block 203, the controller 15 determines whether there is the additional information associated with the previous page in block 205. If there is the additional information associated with the previous page, the controller 15 displays the additional information associated with the previous page in an input window in block 207. Thereafter, the controller 15 confirms that the additional information associated with the previous page is modified in block 209. If there is a save request in block 211, the controller 15 allows the modified additional information to be saved in association with the current page in block 213. Next, if it is requested to end the creating of the additional information in block 215, the controller 15 closes the input window in block 217. Otherwise, if it is not requested to end the creating of the additional information in block 215, block 209 and its subsequent blocks are repeated.

If it is requested to create the new additional information in block 203, that is, if it is requested to create the new additional information which is not related to the additional information associated with the previous page, then the controller 15 displays the input window in block 225 and confirms that the additional information is created in the displayed input window in block 227. Thereafter, if there is a save request in block 229, the controller 15 allows the created additional information to be saved in association with the current page in block 231. Next, if it is requested to end the creating of the additional information in block 232, the controller 15 closes the input window in block 217. Otherwise, if it is not requested to end the creating of the additional information in block 232, block 227 and its subsequent blocks are repeated.

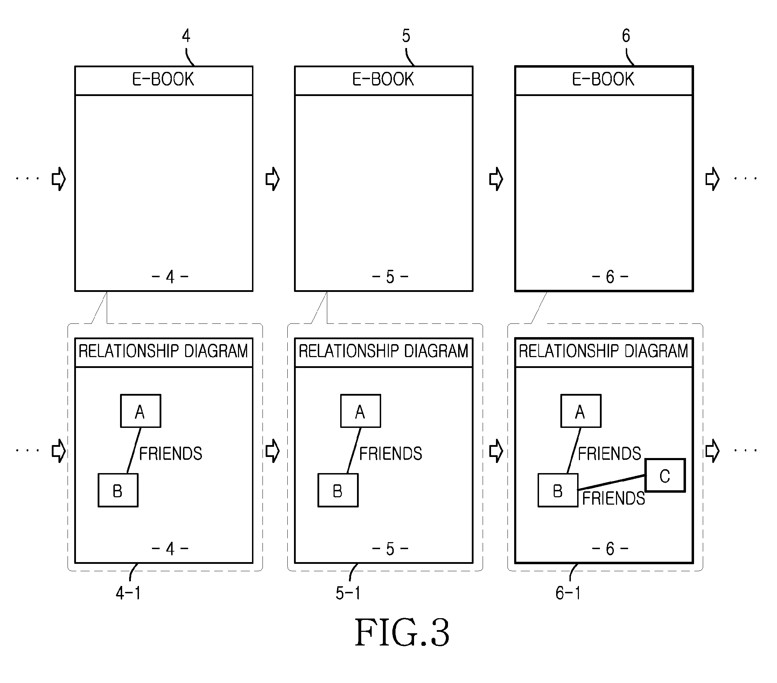

FIG. 3 illustrates a process of creating additional information of e-book contents in an e-book reader according to an exemplary embodiment of the present disclosure. Herein, an input window is displayed when it is requested to create the additional information. It is assumed that the additional information created in the input window according to the exemplary embodiment of the present disclosure is a diagram that shows a correlation between objects such as a thing, a person, a place, a time, or the like. Hereinafter, such a diagram is referred to as a relationship diagram.

Referring to FIG. 3, if it is not requested to create a relationship diagram in a page 5, a relationship diagram of a previous page (i.e., a page 4) is saved without update as a relationship diagram of the page 5.

Thereafter, if it is requested to create a relationship diagram in a page 6 but it is not the request of creating a new relationship diagram, that is, if it is requested to create a relationship diagram related to the relationship diagram of the previous page, the input window displays the relationship diagram of the previous page (i.e., the page 5) and prepares to update the relationship diagram. The relationship diagram displayed in the input window is updated by a user, and is saved in association with the page 6.

At a later time, if it is requested to view a relationship diagram in a selected page, only the relationship diagram associated with the selected page can be viewed. For example, relationship diagrams of previous and next pages cannot be confirmed in the current page. That is, the relationship diagram can be viewed according to a page flow. As will be described below, this encourages the user to study.

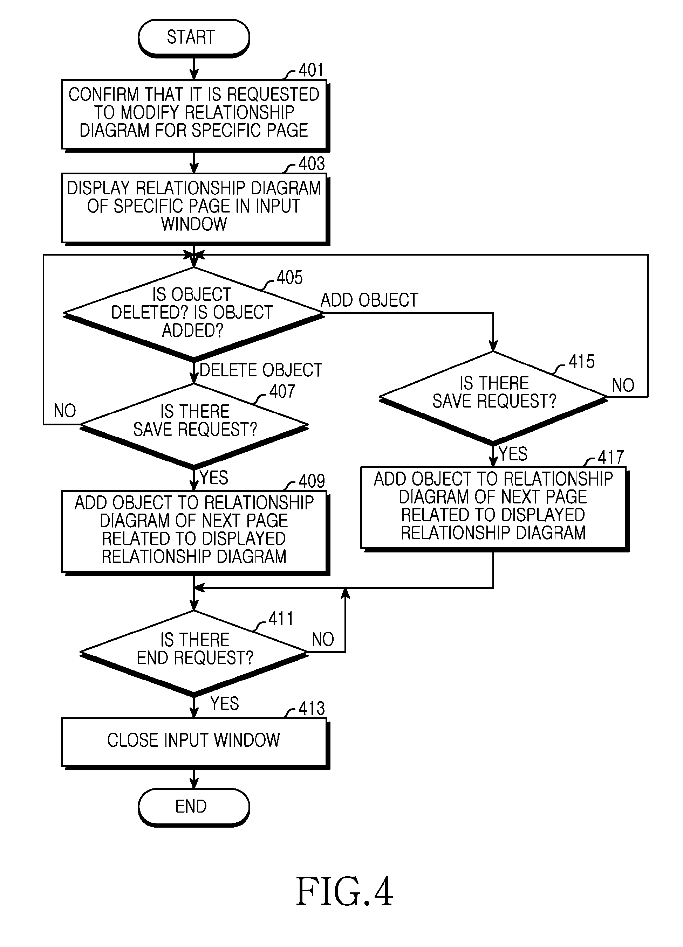

FIG. 4 illustrates a process of modifying additional information of e-book contents in an e-book reader according to an exemplary embodiment of the present disclosure.

Referring to FIG. 4, the controller 15 confirms that it is requested to modify a relationship diagram for a specific page in block 401.

If it is requested to modify the relationship diagram for the specific page, the controller 15 displays the relationship diagram of the specific page in an input window in block 403.

Thereafter, the controller 15 determines whether an object is deleted or added in the relationship diagram of the specific pate in block 405. In the relationship diagram, the object refers to a mutually related target, and will be described below with reference to the accompanying drawings. If the object is deleted and there is a save request in block 407, the controller 15 deletes the object from relationship diagrams of previous or next pages related to the displayed relationship diagram in block 409. If the object is added and there is a save request in block 415, the controller 15 adds the object to relationship diagrams of next pages related to the displayed relationship diagram in block 417.

Next, if there is an end request in block 411, the controller 15 closes the input window in block 413.

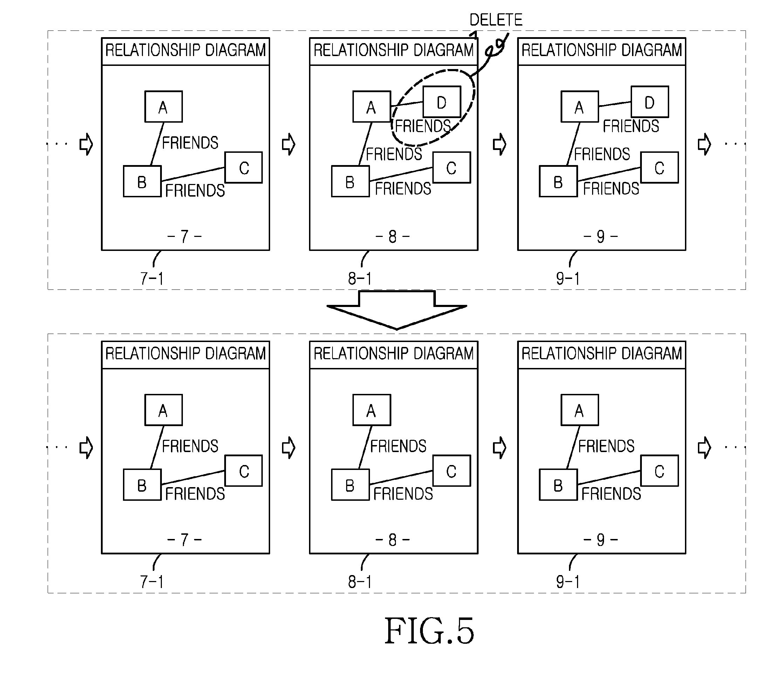

FIG. 5 illustrates a process of deleting an object in a relationship diagram for e-book contents in an e-book reader according to an exemplary embodiment of the present disclosure.

Referring to FIG. 5, if an object D is deleted from a relationship diagram 8-1 of a page 8, the object D is also deleted from a relationship diagram 9-1 of an associated page 9.

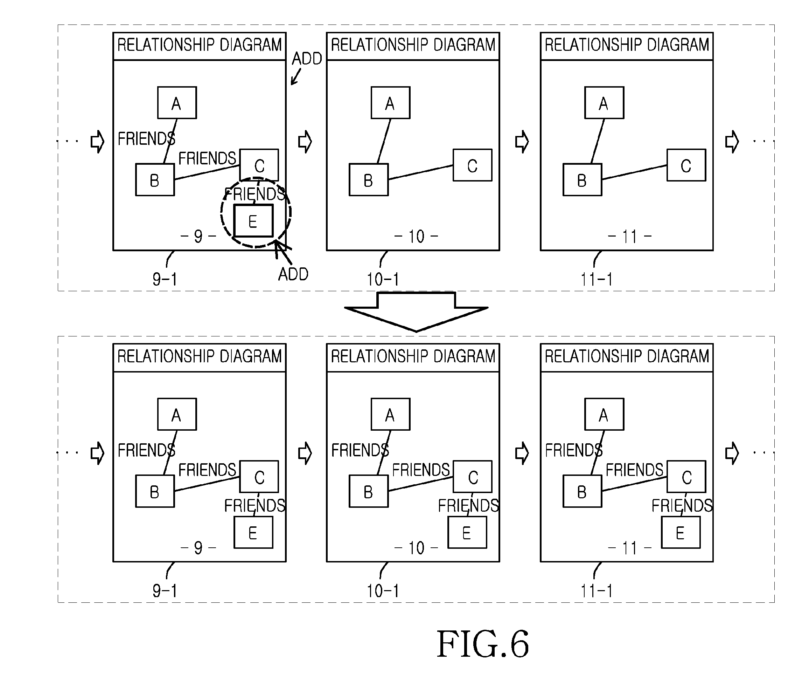

FIG. 6 illustrates a process of adding an object in a relationship diagram for e-book contents in an e-book reader according to an exemplary embodiment of the present disclosure.

Referring to FIG. 6, if an object E is added to a relationship diagram 9-1 of a page 9, the object E is also added to relationship diagrams 10-1 and 11-1 of associated next pages 10 and 11.

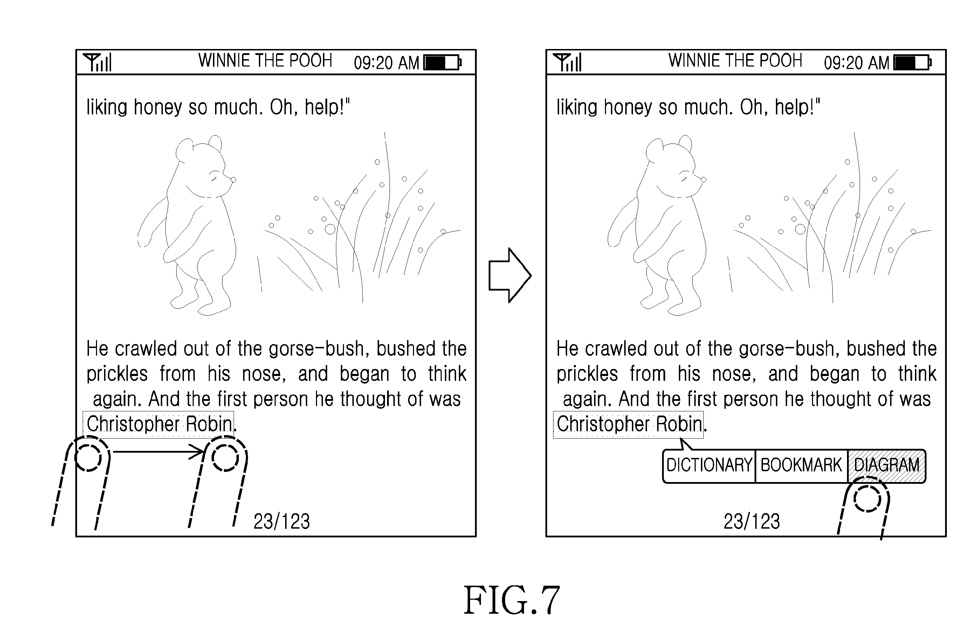

FIG. 7 illustrates a method of displaying an input window for creating and modifying a relationship diagram for e-book contents in an e-book reader according to an exemplary embodiment of the present disclosure. A user can display the input window by using a menu provided by the e-book reader or can display the input window by using an element of the e-book contents as illustrated. The element of the e-book contents can be a displayed text, picture, or the like. For example, a text element 'Christopher Robin' can display menus that include a relationship diagram function menu. When the user designates the text 'Christopher Robin' as a block, the aforementioned menus are displayed. When the relationship diagram function menu is selected, a screen is changed to the input window. The text element 'Christopher Robin' can be automatically created in the input window as an object of the relationship diagram. Thereafter, the user can freely arrange the created object 'Christopher Robin' in the input window, and can directly input a relationship with other objects or select it from pre-registered relationships. Thereafter, when the created relationship diagram is saved and the input window is closed, the screen is changed to a specific page. In this case, the text element 'Christopher Robin' designated as the block can provide a queue indicating that it is included the relationship diagram. Previewing of the relationship diagram or viewing of the relationship diagram can be performed in the text element of 'Christopher Robin' that displays the queue. In this case, the previewing of the relationship diagram through the text element 'Christopher Robin' which displays the queue can entirely show the relationship diagram associated with the specific page or can partially show only a relationship with an object that is directly related with the object 'Christopher Robin'.

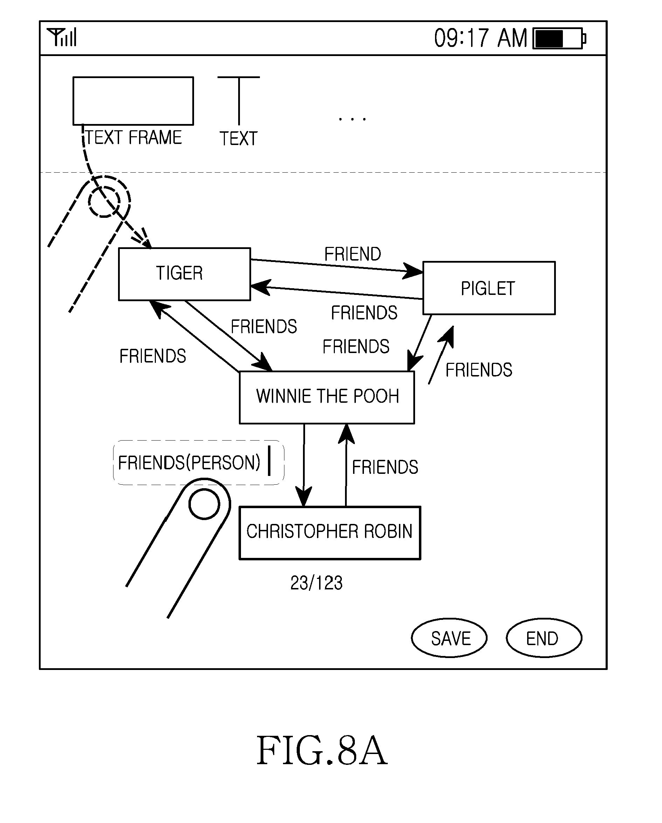

FIG. 8A illustrates a screen which displays an input window for creating a relationship diagram (hereinafter, a relationship diagram input window) according to an exemplary embodiment of the present disclosure.

Referring to FIG. 8A, the relationship diagram input window provides various input tools related to creation of the relationship diagram. The input tool can include a text frame, a figure, an image, an arrow, etc. A user can easily arrange the input tool by using a drag and drop mechanism. For example, a character relationship diagram can be created as follows by using the input tool.

The user displays the relationship diagram input window through a text element 'Christopher Robin' of the e-book contents. In this case, the text element 'Christopher Robin' can be displayed as an object by being automatically inserted to the relationship diagram input window. Otherwise, the user can select the text frame and then inputs 'Christopher Robin' inside the text frame, thereby making it as the object. After arranging the object, the user inserts an arrow for indicating a relation structure with other objects and inputs a relation. In this case, if the object is created, the arrow and an input box for writing the relationship can be automatically created. Thereafter, the user can modify the created arrow and then can link it to other objects. If the relationship diagram input window is specialized for the character relationship diagram, a list for showing pre-determined relationships (e.g., mother, father, friend, etc.) can be displayed. Such a list is hereinafter referred to as a relationship list. Therefore, the user can select the relationship from the list without having to directly input the relationship. For example, when a character A and a character B are linked via an arrow, a predetermined relationship list is shown, and one of relationships can be selected from the relationship list.

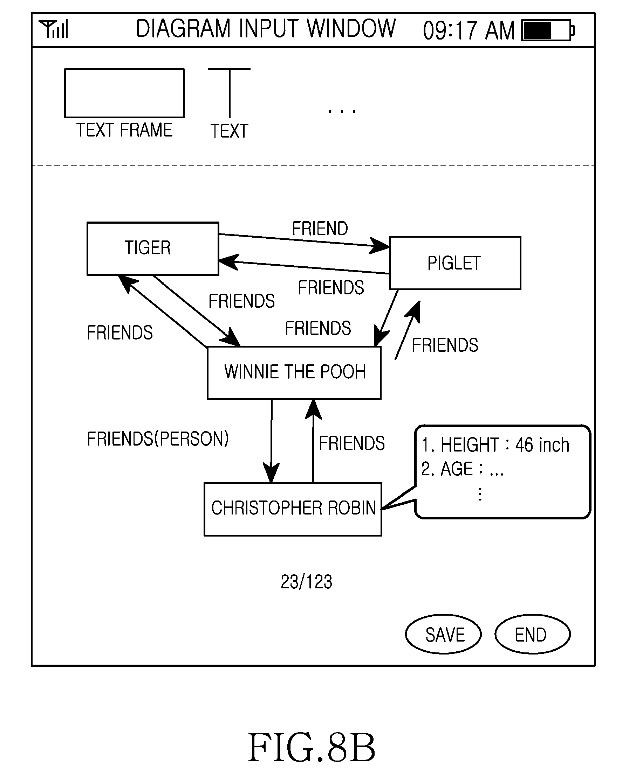

In addition, the user can input a detailed description on the character object of the character relationship diagram. For example, an age of the character object 'Christopher Robin', clothes worn by the character object, or the like can be input. FIG. 8B illustrates a screen for inputting a detailed description depending on a specific object in a relationship diagram input window according to an exemplary embodiment of the present disclosure. As illustrated, the user can input the detailed description by using a memo among the input tools. An object having the detailed description can have a queue that provides viewing of the detailed description. For example, if the user touches the object 'Christopher Robin' while viewing the relationship diagram, the detailed description is displayed.

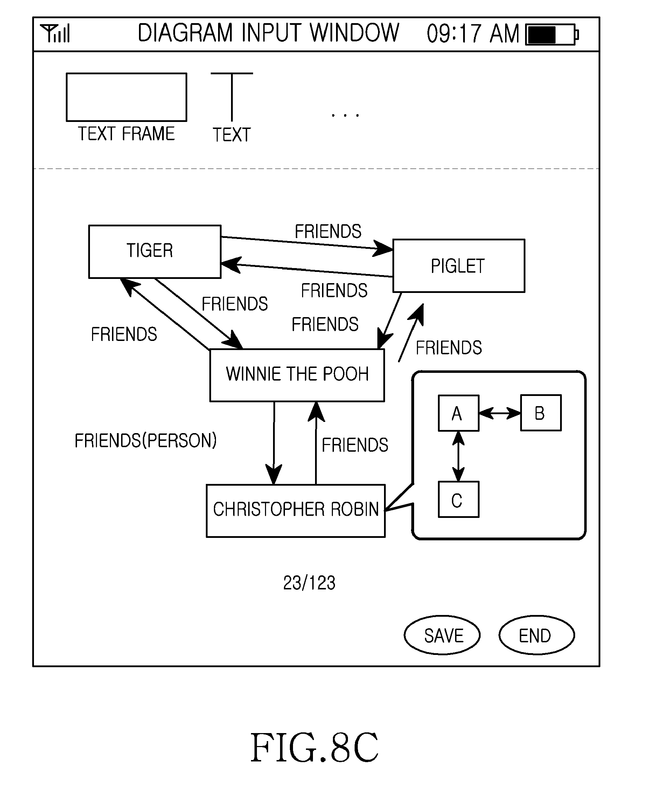

In addition, the user can create the relationship diagram depending on the character element of the character relationship diagram. For example, a family relationship diagram of the character object 'Christopher Robin', a relationship diagram related to place movement, or the like can be created by using the aforementioned method. FIG. 8C illustrates a screen for creating a relationship diagram depending on a specific object (hereinafter, referred to as a dependent relationship diagram) in an input window according to an exemplary embodiment of the present disclosure. As illustrated, the user can create the relationship diagram in a memo box according to the aforementioned method. An object having the relationship diagram has a queue that provides viewing of the relationship diagram.

For example, if the user touches the object 'Christopher Robin' while viewing the relationship diagram, the dependent relationship diagram is displayed.

Thereafter, when the user presses a save button, the created character relationship diagram is saved in association with a specific page. Next, when the user presses an end button, the relationship diagram input window is closed and a current screen is changed back to a screen of the specific page of the e-book contents. In this case, the element 'Christopher Robin' on the e-book contents is an element that displays the relationship diagram input window, and enables display of a queue to provide previewing of a next relationship diagram, viewing of the relationship diagram, and entering of the relationship diagram input window.

Not only the character relationship diagram but also various relationship diagrams that can be expressed in a diagram pattern can be created. Examples of the relationship diagram include an organization chart, a flowchart, a table, etc.

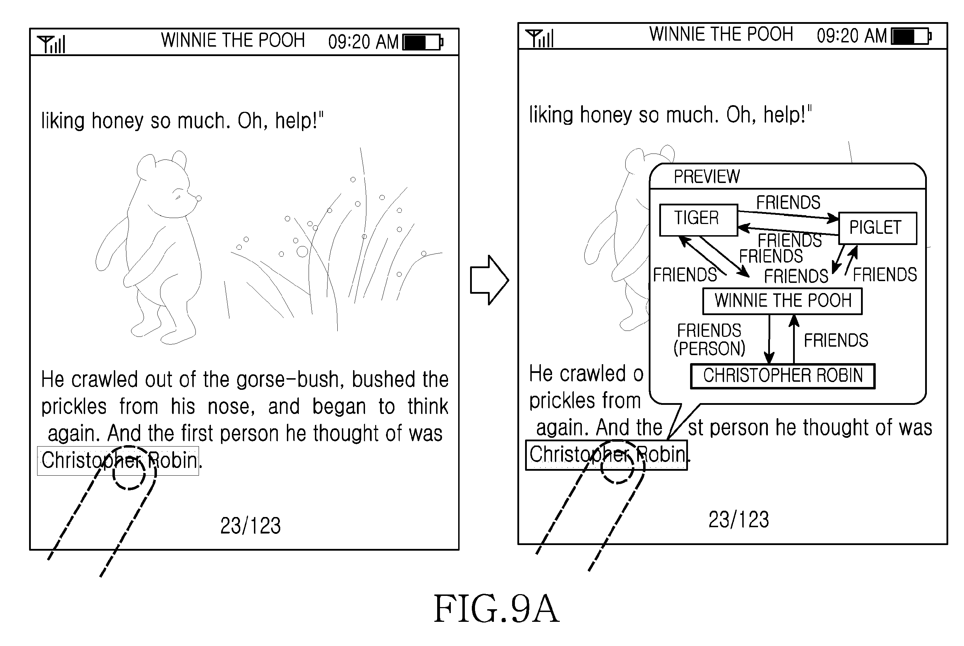

FIG. 9A illustrates a preview screen of a relationship diagram by using an element which indicates a queue in a specific page of e-book contents according to an exemplary embodiment of the present disclosure.

Referring to FIG. 9A, when a user touches a text element 'Christopher Robin' which indicates the queue in the specific page, a relationship diagram associated with the page is previewed as illustrated. In this case, an object on the relationship diagram corresponding to the text element 'Christopher Robin' which provides the queue can be displayed by being relatively highlighted.

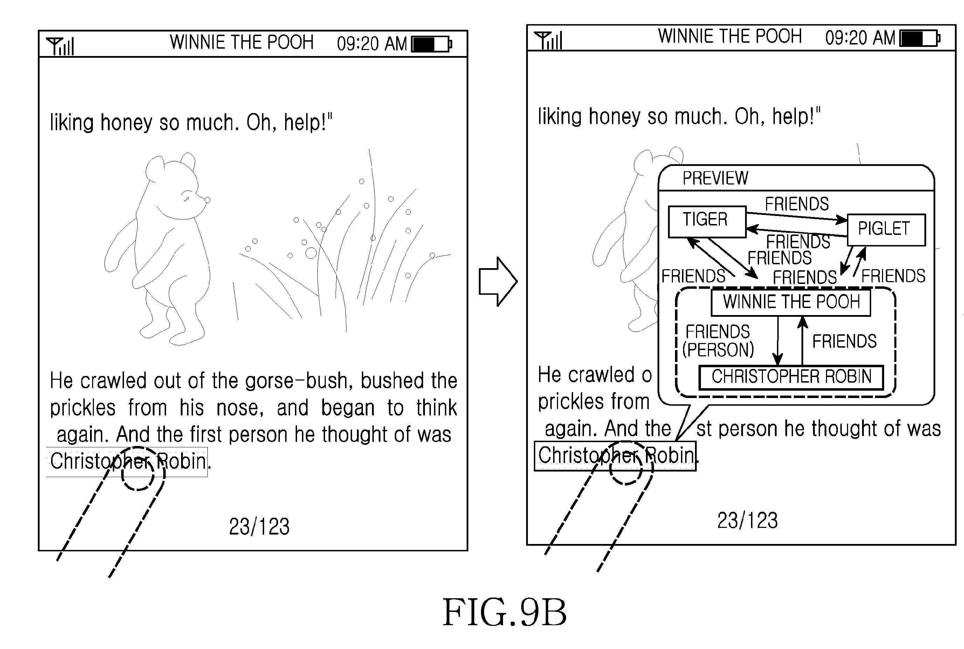

FIG. 9B illustrates a preview screen of a relationship diagram by using an element which indicates a queue in a specific page of e-book contents according to an exemplary embodiment of the present disclosure.

Referring to FIG. 9B, when a user touches a text element 'Christopher Robin' which indicates the queue in the specific page, a relationship diagram associated with the page is previewed as illustrated. In this case, a relationship between an object on the relationship diagram corresponding to the text element 'Christopher Robin' which provides the queue and an object (i.e., 'Winnie the Pooh') directly related to the element can be displayed by being relatively highlighted.

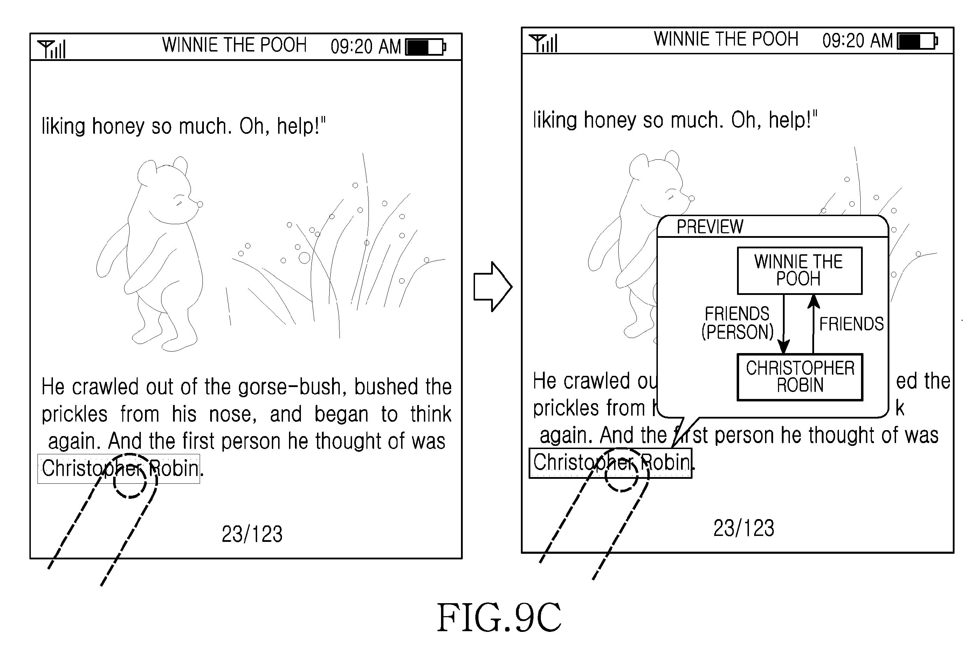

FIG. 9C illustrates a preview screen of a relationship diagram by using an element which indicates a queue in a specific page of e-book contents according to an exemplary embodiment of the present disclosure.

Referring to FIG. 9C, when a user touches a text element 'Christopher Robin' which indicates the queue in the specific page, a relationship diagram associated with the page is previewed as illustrated. In particular, in the relationship diagram, only an object corresponding to the text element 'Christopher Robin' which provides the queue, another object (i.e., 'Winnie the Pooh') directly related to the element, and a relationship between the two objects can be previewed.

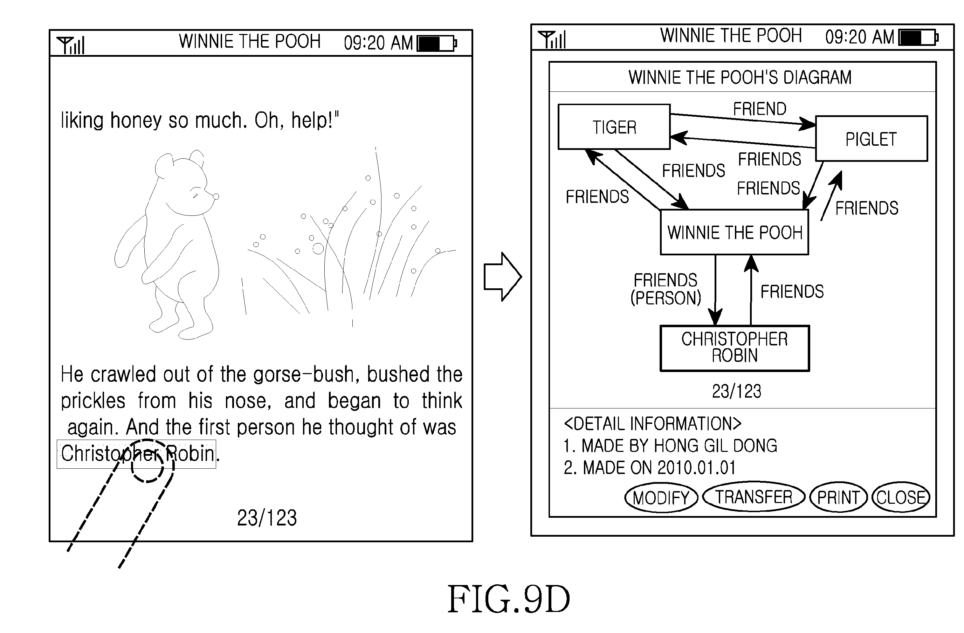

FIG. 9D illustrates a view screen of a relationship diagram by using an element which indicates a queue in a specific page of e-book contents according to an exemplary embodiment of the present disclosure.

Referring to FIG. 9D, a screen is changed to a view window for displaying a relationship diagram associated with the page (hereinafter, a relationship diagram view window) by using a text element 'Christopher Robin' which indicates a queue in the page. The relationship diagram view window can display detailed information such as a creator, a creation date, a page, etc. As described above, if it is requested to view the relationship diagram in a current page, only a relationship diagram associated with the current page can be viewed. For example, relationship diagrams of previous and next pages cannot be confirmed in the current page. That is, the relationship diagram view window is used to view a relationship diagram according to a page flow. As will be described below, this encourages the user to study. In addition, to modify the relationship diagram, the relationship diagram view window can have a button for changing to the aforementioned relationship diagram input window described in FIG. 8A. The user can modify the relationship diagram of the specific page in the changed relationship diagram input window. At a later time, modified contents can be applied to a relationship diagram of another associated page as described in FIG. 4 to FIG. 6. Further, the relationship diagram view window can have a button for transferring the relationship diagram to a third party. The third party can be a specific server, another reader, etc. For example, when the user presses a transfer button while viewing the relationship diagram associated with the current page, only the relationship diagram associated with the current page can be transferred to the third party, or can be transferred to the third party by including relationship diagrams of previous pages related to the relationship diagram of the current page. In addition, the relationship diagram view window can further have a button for a printing function or the like. At a later time, when the user closes the relationship diagram view window, the screen is changed to the specific page of e-book contents.

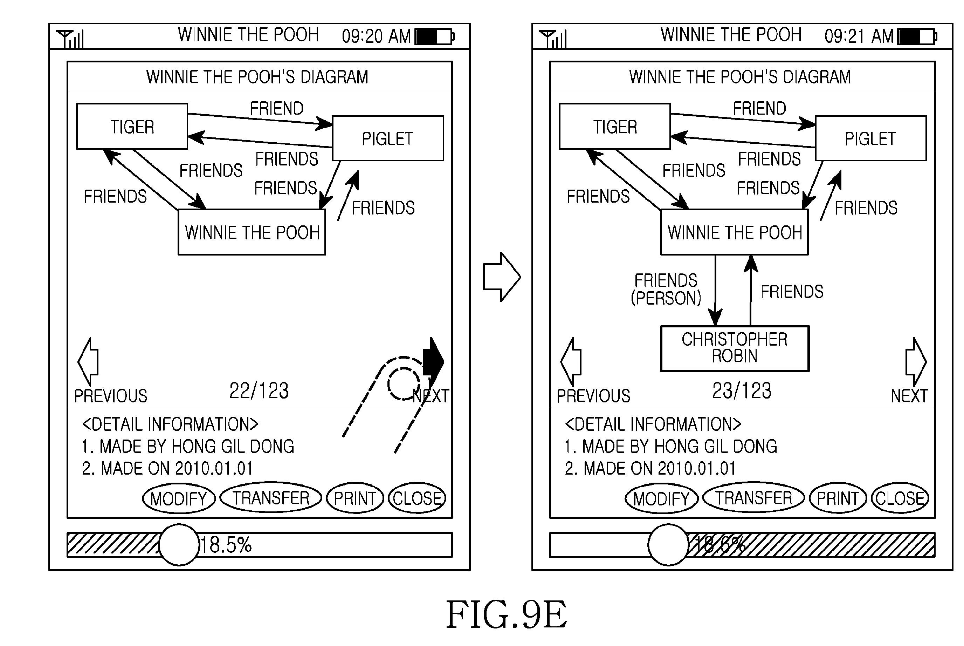

FIG. 9E illustrates a screen for viewing a relationship diagram according to an exemplary embodiment of the present disclosure.

Referring to FIG. 9E, the relationship diagram can be separately viewed instead of displaying the relationship diagram while viewing a specific page as illustrated in FIG. 9D. As illustrated, a relationship diagram associated with the specific page is displayed according to a page flow.

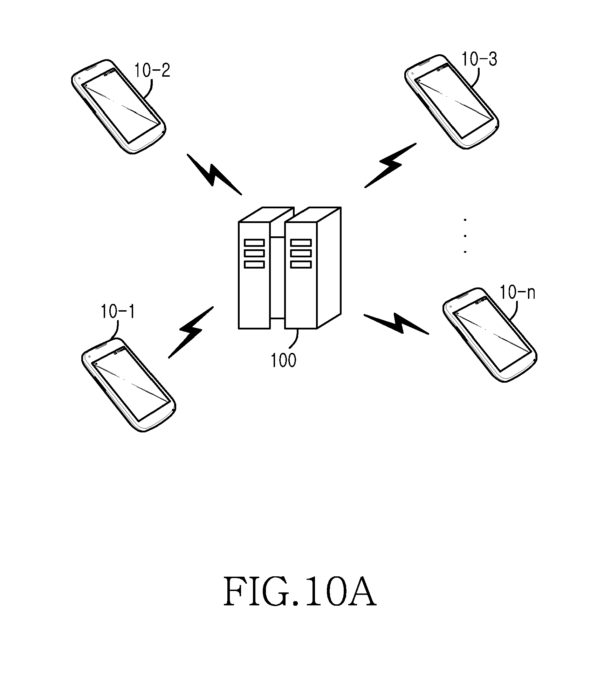

FIG. 10A illustrates a system for sharing e-book contents' additional information created by users according to an exemplary embodiment of the present disclosure.

Referring to FIG. 10A, users of a plurality of e-book readers 10-1, 10-2, 10-3,..., 10-n can share additional information of the e-book contents via a server 100. The server 100 includes a database for storing the additional information and devices for managing the database. As will be described below, the user can understand what is written in the e-book contents by the aid of additional information created by a different user. In addition, with respect to the same e-book contents, the user can compare additional information created by the user with the additional information created by the different user, which can produce a learning process.

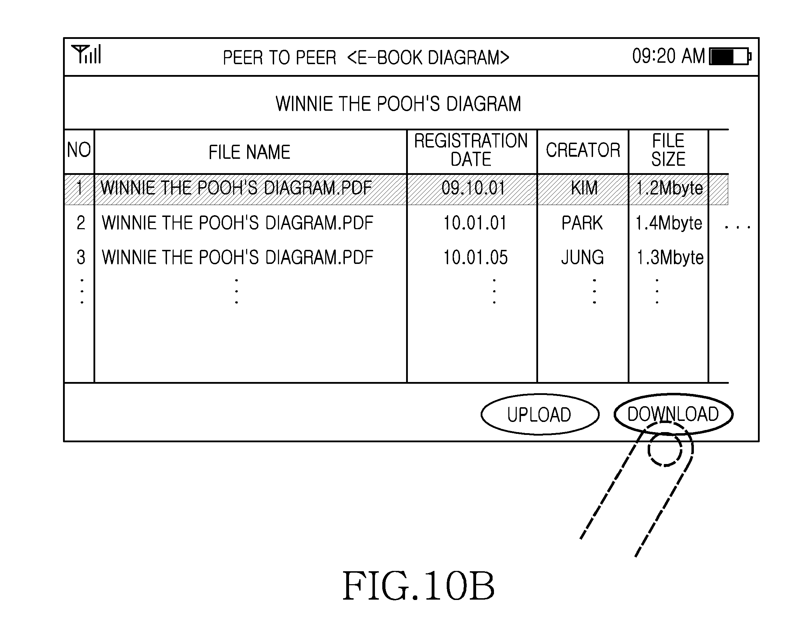

FIG. 10B illustrates a screen for uploading or downloading additional information by accessing to a server prepared to share additional information of e-book contents in an e-book reader according to an exemplary embodiment of the present disclosure.

Referring to FIG. 10B, users can upload e-book contents' relationship diagram created by themselves to the server. As illustrated, relationship diagrams (i.e., Winnie the Pooh's diagram) created for the same e-book contents (i.e., Winnie the Pooh) are displayed by being listed in the order of criteria such as a registration date, a file size, etc. The criteria are displayed in tabs, and the user can press a specific tab to make the relationship diagrams as a new list. For example, when the user presses a tab of 'registration date' to search for the latest relationship diagram, the relationship diagrams are listed starting from the latest one. By performing the search operation, the user can select and then download a specific relationship diagram.

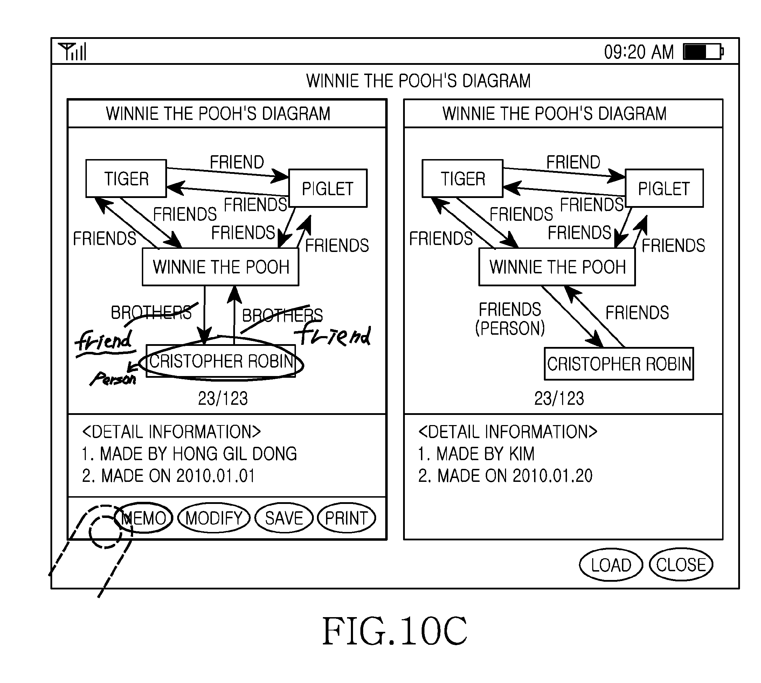

FIG. 10C illustrates a view window for comparing relationship diagrams created for the same e-book contents in an e-book reader according to an exemplary embodiment of the present disclosure.

Referring to FIG. 10C, the view window displays relationship diagrams associated with the same page. For example, it is assumed that a relationship diagram illustrated in the left side is created by the user and a relationship diagram illustrated in the right side is created by a different user. If the relationship diagram created by the different user is correct and the relationship diagram created by the user is incorrect, the user can modify the relationship diagram by changing the screen to a relationship diagram input window. The present disclosure is not limited thereto, and thus the user can write a memo for a to-be-modified item on the relationship diagram created by the user by using a free drawing mechanism as illustrated. The relationship diagram in which the memo is written can be saved and printed. As described, the user can study by using the relationship diagram of the different user. The correct relationship diagram can be provided in general by an author or publisher of the e-book contents. Alternatively, the correct relationship diagram can be provided by a specific study organization.

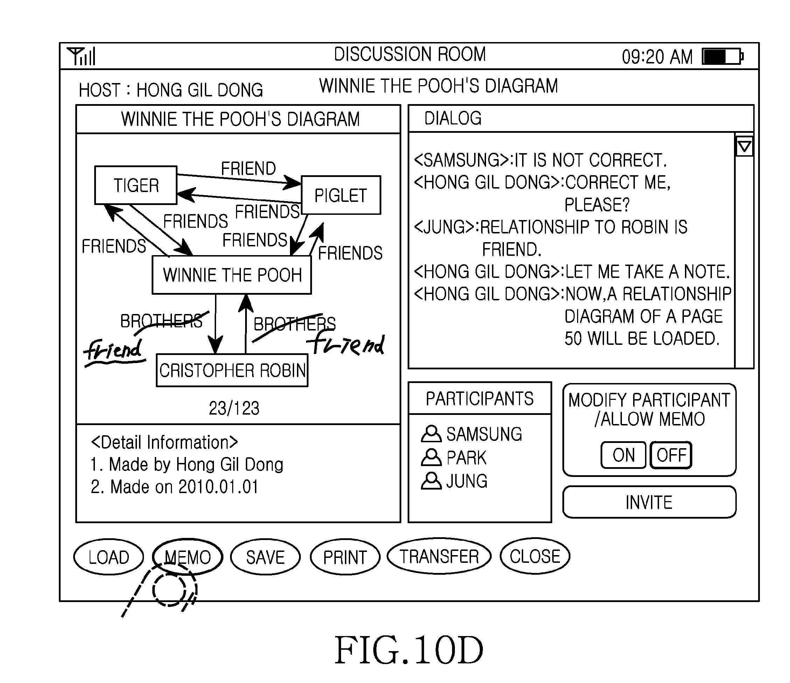

FIG. 10D illustrates a screen when accessing to a server to discuss a relationship diagram of e-book contents in an e-book reader according to an exemplary embodiment of the present disclosure.

Referring to FIG. 10D, a user opens a discussion room, and then loads and displays a to-be-discussed relationship diagram of a specific page. Participants of the discussion room can chat about the displayed relationship diagram, and a to-be-modified item of the user can be corrected. The user can modify the relationship diagram by changing the screen to an input window while chatting or can write a memo for the to-be-modified item on the relationship diagram by using a free drawing mechanism by executing a memo function as illustrated. Optionally, the participants to the chatting can be allowed to modify the relationship diagram or to write a memo for the relationship diagram. That is, the participants can modify and create the relationship diagram together by performing data synchronization between the server and readers. In this case, whether to permit an access right of the relationship diagram and whether to open the relationship diagram can be determined according to a user environment configuration. For example, whether to open the relationship diagram can be designated by the user to one of 'open to all users', 'do not open to any user, and 'open to a specific user'.

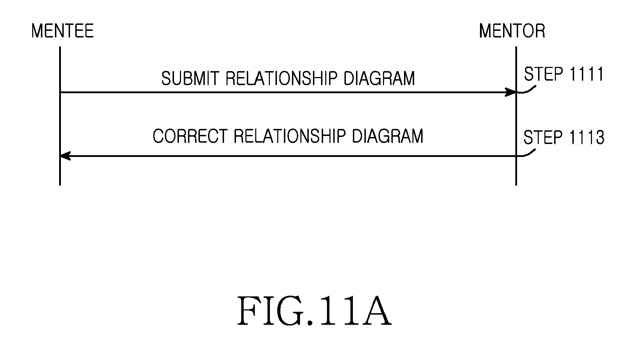

FIG. 11A illustrates a process for remote learning according to an exemplary embodiment of the present disclosure.

Referring to FIG. 11A, a mentee (i.e., a person who takes a lesson) submits a relationship diagram created for e-book contents to a mentor (i.e., a person who teaches the lesson) in block 1111. The mentor corrects the relationship diagram created by the mentee in block 1113. For example, the mentor posts a notification onto a study server to inform that the mentee has to submit an assignment of creating the relationship diagram for the contents by a due date. The study server announces the notification to the e-book reader so that the mentee can check for this notification. Alternatively, the mentee can directly check for the notification by accessing to the study server via the e-book reader. After creating the relationship diagram in the e-book reader, the mentee uploads the relationship diagram to the study server. The study server can announce to the e-book reader of the mentor that the mentee has submitted the assignment. Alternatively, the mentor can directly access to the study server and thus can directly check that the mentee has submitted the assignment. The mentor can download and view the relationship diagram submitted by the mentee, and can correct it according to the aforementioned method. The mentor uploads the corrected relationship diagram to the study server and notifies this. The study server announces the notification to the e-book reader of the mentee so that the mentee can check for the notification. Alternatively, the mentee can access to the study server to directly check for the notification. The mentee can download the corrected relationship diagram and can check for the corrected contents.

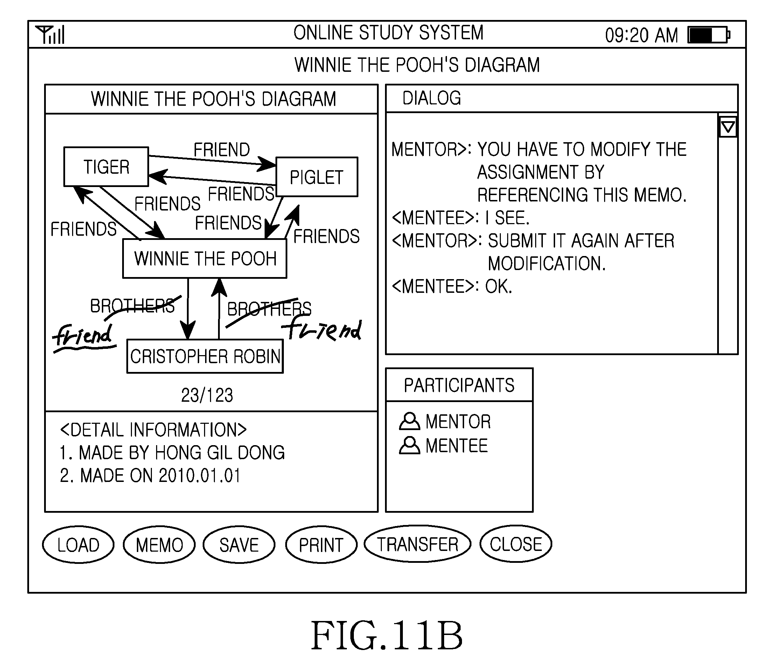

The correction process provided from the mentor can be achieved on a real-time basis in the discussion room which is open in the study server as described above in FIG. 10D. FIG. 11B illustrates a screen when an e-book reader accesses to a server for remote learning according to an exemplary embodiment of the present disclosure. The server creates a cyber study space including a storage for e-book contents, a bulletin board, a tool for creating a relationship diagram, a tool required for correction, a chatting room, etc. According to the aforementioned method of FIG. 10D, the mentee can take a lesson of correction on a real-time basis from the mentor.

According to exemplary embodiments of the present disclosure, additional information of e-book contents can be created to help understanding, and a user can study by using the additional information.

While the present disclosure has been particularly shown and described with reference to exemplary embodiments thereof, it will be understood by those skilled in the art that various changes in form and details may be made therein without departing from the spirit and scope of the present disclosure as defined by the appended claims.

## Claims

1. A method of creating a relationship diagram for electronic book (e-book) contents in a reader; the method comprising:
determining whether there is a relationship diagram creation request in a current page (203);
if there is the relationship diagram creation request, determining whether there is a relationship diagram associated with a previous page (205);
if there is the relationship diagram associated with the previous page, displaying the relationship diagram in an input window (207); and
if the relationship diagram displayed in the input window is modified and there is a save request, allowing the modified relationship diagram to be saved in accordance with the current page (213).

2. The method of claim 1, further comprising:
if there is no relationship diagram creation request in the current page, determining whether there is the relationship diagram associated with the previous page (219); and
if there is the relationship diagram associated with the previous page, allowing the relationship diagram to be saved in association with the current page (213).

3. The method of claim 1, wherein the relationship diagram creation request is generated by using a predetermined key or an element displayed by the e-book contents.

4. The method of claim 3, wherein the element of the e-book contents is any one of a text and an image.

5. The method of claim 3, wherein if the relationship diagram creation request is generated by using the element of the e-book contents, a relationship diagram object for the element is automatically created in the input window.

6. The method of claim 3, wherein the element of the e-book contents provides a queue for a preview function, a view function, or a modification function for an updated relationship diagram.

7. The method of claim 6, wherein the preview function displays a relationship diagram reduced according to a specific rate on a current page screen.

8. An apparatus for creating a relationship diagram for e-book contents in a reader, the apparatus comprising
a storage unit (11) configured to store target data to be displayed;
a display unit (12) configured to display an image signal by decoding the data stored in the storage unit;
an input unit (12) configured to display a user input; and
a controller (15) configured to provide overall control for an operation of the e-book reader,
wherein if there is a relationship diagram creation request in a current page and there is a relationship diagram associated with a previous page, the controller displays the relationship diagram on an input window, and if the relationship diagram displayed on the input window is modified and there is a save request, the controller allows an updated relationship diagram to be saved in association with the current page.

9. The apparatus of claim 8, wherein if there is no relationship diagram creation request in the current page, the controller determines whether there is the relationship diagram associated with the previous page, if there is the relationship diagram associated with the previous page, the controller allows the relationship diagram to be saved in association with the current page.

10. The apparatus of claim 8, wherein the relationship diagram creation request is generated by using a predetermined key or an element displayed by the e-book contents.

11. The apparatus of claim 10, wherein the element of the e-book contents is any one of a text and an image.

12. The apparatus of claim 10, wherein if the relationship diagram creation request is generated by using the element of the e-book contents, the controller automatically creates a relationship diagram object for the element in the input window.

13. The apparatus of claim 10, wherein the controller provides the element of the e-book contents with a queue for a preview function, a view function, or a modification function for an updated relationship diagram.

14. The apparatus of claim 13, wherein the preview function displays a relationship diagram reduced according to a specific rate on a current page screen.

15. The apparatus of claim 13, wherein, in the relationship diagram of the current page, the preview function displays only an object related to an element that provides a queue, another element that directly relates to the object, and a part that shows a relationship between the two entities on a current page screen.
